# EUROPEAN PATENT APPLICATION

(11) **EP 4 847 453 A1**
(43) Date of publication of application: **02.12.2026**
(21) Application number: 26180227.6
(22) Date of filing: 21.05.2026
(51) Int. Cl.: C02F 1/461, C25B 15/08, F23D 14/60, A47L 15/42, C02F 1/42

(54) **AN H2 GAS DISPOSAL ASSEMBLY SUITABLE FOR USE IN HOUSEHOLD APPLIANCES**

(30) Priority: 28.05.2025 TR 2025006946
(71) Applicant: Arçelik Anonim Sirketi, 34445 Istanbul (TR)
(72) Inventor: TARKUC, SIMGE, 34445 ISTANBUL (TR); SENGONUL, HUSEYIN, 34445 ISTANBUL (TR); YESILCUBUK, SULEYMAN ALPER, 34445 ISTANBUL (TR)

(57) **Abstract**

The present invention relates to an H₂ gas disposal assembly (100) suitable for use together with electrolysis-based water softening and regeneration units, comprising an electrolysis cell (1) having an anode compartment (11) and a cathode compartment (12) to provide the regeneration of an ion exchange resin, a basic solution tank (2) associated with the electrolysis cell (1) so as to circulate a base solution rich in OH⁻ ions with the cathode compartment (12); an acid tank (3) associated with the electrolysis cell (1) so as to circulate an acid solution rich in H⁺ ions with the anode compartment (11); a power source (4) that provides the energy required for the operation of the electrolysis cell (1); a reaction environment (5) configured such that the H₂ gas stored in the basic solution tank (2) is brought together with O₂ gas; a detection member (6) arranged to determine the amount of H₂ gas in the reaction environment (5); an ignition member (7) associated with the reaction environment (5) for initiating a combustion reaction; and a pressure balancing valve (8) arranged to provide the gas discharge required for balancing the pressure in the reaction environment (5), and relates to a household appliance comprising said assembly (100).

## Description

The present invention relates to an H₂ gas disposal assembly that is used particularly in household appliances performing washing operations and that ensures the discharge of H₂ gas generated in water softening units, wherein electrolysis-based ion exchange resin regeneration is performed, to the exterior of the unit.

Domestic water softening systems are widely used particularly in washing appliances such as dishwashers and washing machines. Said systems have been developed in order to prevent limescale formation caused by hard water, decrease in detergent efficiency, and damage that may occur in internal components of the appliance. Accordingly, the state of the art electrolysis-based water softening and regeneration systems enable the electrolysis of water for regenerating ion exchange resins. As a result of this process, hydrogen gas (H₂) is generated in the cathode region. Since the generated hydrogen gas has flammable and explosive properties, it may pose serious safety risks when not discharged properly. Particularly in appliances having enclosed environments such as dishwashers and washing machines, accumulation of hydrogen gas may be dangerous and may adversely affect the safe operation of the appliance. On the other hand, the efficiency of the electrolysis cell decreases over time due to accumulation of gases generated during electrochemical reactions on the surfaces of the anion exchange membrane, the cation exchange membrane, and the bipolar ion exchange membrane. Due to the accumulation of these gases, which cannot be removed from the electrolysis cell, on the electrode surfaces over time, the active surface area of the electrodes also decreases. As a result, a solution having the conductivity and pH values required for the regeneration of the ion exchange resin cannot be obtained.

In the prior art, there is no study related to the disposal of hydrogen gas generated in electrolysis-based water softening units. In the state of the art washing appliances, passive ventilation systems are generally used for the disposal of hydrogen gas. However, said methods do not fully ensure the controlled and rapid discharge of hydrogen.

Therefore, there is a need for a disposal assembly that enables the safe, efficient, and controlled discharge of hydrogen gas in household washing appliances having electrolysis-based water softening and regeneration units.

The aim of the present invention is to prevent the accumulation of hydrogen gas generated in the cathode compartment during each regeneration cycle in household appliances wherein electrolysis-based regeneration is performed for softening the mains water, and to ensure the continuous disposal thereof. Thus, decrease in efficiency caused by the clogging of the anion and cation exchange membranes in the electrolysis cell and the accumulation of hydrogen on the electrode surfaces is prevented. Accordingly, it is ensured that the regeneration solution required for the regeneration of the ion exchange resin sustainably has the desired conductivity and pH values.

The H₂ gas disposal assembly of the present invention comprises an electrolysis cell having an anode compartment and a cathode compartment in order to provide the regeneration of an ion exchange resin; a basic solution tank associated with the electrolysis cell so as to circulate a base solution rich in OH⁻ ions with the cathode compartment; an acid tank associated with the electrolysis cell so as to circulate an acid solution rich in H⁺ ions with the anode compartment;
a power source that provides the energy required for the operation of the electrolysis cell; a reaction environment configured such that the H₂ gas stored in the basic solution tank is brought together with O₂ gas; a detection member arranged to determine the amount of H₂ gas in the reaction environment; an ignition member associated with the reaction environment for initiating a combustion reaction; and a pressure balancing valve arranged to balance the pressure in the reaction environment. Thus, it becomes possible to discharge H₂ formed in the cathode compartment and transferred therefrom to the basic solution tank upon exceeding a certain level. According to this configuration, the reaction environment provides a suitable environment for combining the hydrogen gas accumulated in the basic solution tank with oxygen. By means of the ignition member, the combustion reaction is initiated, and the water vapor formed as a result of the reaction is removed from the reaction environment via the pressure balancing valve. Thus, the hydrogen gas, which causes hazard and efficiency loss for the water softening and regeneration unit, can be converted and released into the environment as water vapor. Accordingly, it is ensured that the regeneration solution required for the regeneration of the ion exchange resin sustainably has the desired conductivity and pH values.

In an embodiment of the present invention, the detection member is an H₂ gas sensor configured to measure the amount of H₂ gas in the reaction environment. Thus, the amount of hydrogen in the reaction environment is measured directly in the reaction environment. In the event that the measurement indicates a value above a predetermined threshold, the ignition member is activated so as to initiate the combustion reaction. In an embodiment, the aforementioned threshold value corresponds to hydrogen gas being 4% by volume in the reaction environment. Accordingly, in an embodiment, a control member is provided to ensure communication between the H₂ gas sensor and the ignition member.

In an embodiment of the present invention, the detection member is an ammeter configured to measure the current density of the power source depending on the operation of the electrolysis cell and, accordingly, to ensure the calculation of the amount of H₂ gas generated in the electrolysis cell. According to this configuration, the amount of hydrogen in the reaction environment is calculated indirectly by measuring the current density of the power source. Since the power source is connected to the electrolysis cell, the operating duration of the power source and, accordingly, the power drawn by the electrolysis cell from the power source are directly proportional to the amount of hydrogen gas generated in the electrolysis cell. In an embodiment, if the operating duration of the power source exceeds 10 minutes and/or the current density measured by the ammeter exceeds 0.1 amperes, the ignition member is activated so as to initiate the combustion reaction. Accordingly, in an embodiment, a control member is provided to ensure communication between the ammeter and the ignition member.

In an embodiment of the present invention, the reaction environment is a reaction tank associated with the basic solution tank and the acid tank. In this embodiment, the reaction tank is separated from the basic solution tank and the acid tank, but is associated with both so as to allow gas exchange therewith. Accordingly, the oxygen (O₂) gas that will enter into the combustion reaction with hydrogen is supplied from the acid tank, wherein the oxygen gas coming from the anode compartment is stored and circulated. By means of this configuration, it becomes possible to better manage gas mixtures and realize the combustion reaction in a controlled manner. This configuration also allows the volumes of the basic solution tank and the acid tank to be reduced.

In an embodiment of the present invention, the H₂ gas disposal assembly comprises a first delivery line configured to allow the gas exchange between the reaction tank and the basic solution tank and, accordingly, to allow the delivery of the H₂ gas in the basic solution tank to the reaction tank. Thus, it becomes possible to deliver the hydrogen gas in the basic solution tank to the reaction tank in a controlled manner. Preferably, a flow control valve may be provided on the first delivery line to adjust the amount of hydrogen gas delivered to the reaction tank.

In an embodiment of the present invention, the H₂ gas disposal assembly comprises a second delivery line configured to allow the gas exchange between the reaction tank and the acid tank and, accordingly, to allow the delivery of the O₂ gas in the acid tank to the reaction tank. Thus, it becomes possible to deliver the oxygen gas in the acid tank to the reaction tank in a controlled manner. Preferably, a flow control valve may be provided on the second delivery line to adjust the amount of oxygen gas delivered to the reaction tank.

In an embodiment of the present invention, the reaction environment is the basic solution tank itself. By means of this configuration, the need for a separate reaction tank is eliminated, thereby providing savings in both internal device volume and manufacturing costs. Since the combustion reaction takes place directly in the basic solution tank, the need for transferring hydrogen gas to another reaction environment is also eliminated.

In an embodiment of the present invention, the H₂ gas disposal assembly comprises an inlet valve that is arranged on the basic solution tank so as to enable the delivery of the ambient air in the environment to the basic solution tank as an O₂ gas source and, accordingly, to adjust the amount of O₂ entering the basic solution tank. According to this configuration, the reaction environment is the basic solution tank wherein hydrogen gas is already accumulated, that is, the bringing into contact of hydrogen gas with oxygen gas is carried out within the basic solution tank. The oxygen to be delivered to the basic solution tank is obtained from the atmosphere/air of the environment wherein the assembly is located. The amount of air, and thus the amount of O₂, to be introduced into the basic solution tank is adjusted by means of the inlet valve depending on the amount of H₂ in the basic solution tank.

In an embodiment of the present invention, the H₂ gas disposal assembly comprises an O₂ delivery line configured to ensure the delivery of O₂ gas leaving the acid tank to the basic solution tank. According to this configuration, the reaction environment is the basic solution tank wherein hydrogen gas is already accumulated, that is, the bringing into contact of hydrogen gas with oxygen gas is carried out within the basic solution tank. The oxygen to be delivered to the basic solution tank is obtained from the acid tank. In an embodiment, the amount of oxygen gas conveyed from the acid tank via the O₂ delivery line to be introduced into the basic solution tank may be adjusted by means of the inlet valve depending on the amount of H₂ in the basic solution tank.

The present invention also discloses a method for disposing H₂ gas to be implemented in the H₂ gas disposal assembly as in any of the above embodiments, comprising the steps of:
i. checking whether the electrolysis cell is active,
ii. checking whether the power source is active,
iii. checking whether the circulation between the electrolysis cell and the basic solution tank and the acid tank is active,
iv. determining the volumetric ratio of H₂ gas in the reaction environment by means of the detection member,
v. activating the ignition member if the ratio of H₂ gas in the reaction environment exceeds a predetermined threshold value,
vi. opening the pressure balancing valve, simultaneously with the activation of the ignition member, to balance the pressure decreasing as a result of the combustion reaction and to discharge the resulting gases,
vii. closing the pressure balancing valve at the end of the reaction, and
viii. returning to step (iv).

By means of said method, it becomes possible to discharge H₂ gas generated in the electrolysis-based water softening and regeneration units to the exterior of the unit. Thus, the hydrogen gas, which causes hazard and efficiency loss for the water softening and regeneration unit, is enabled to be converted and released into the environment as water vapor. Accordingly, it is ensured that the regeneration solution produced by the electrolysis cell and used for the regeneration of the ion exchange resin is sustainably produced with the desired conductivity and pH values.

In an embodiment of the present invention, the detection member mentioned in step (iv) is an H₂ gas sensor configured to measure the amount of H₂ gas in the reaction environment. Thus, the amount of hydrogen in the reaction environment is measured directly in the reaction environment. The reaction environment mentioned herein may be a reaction tank associated with the basic solution tank and the acid tank, or the basic solution tank itself. Accordingly, the H₂ gas sensor may be provided on the reaction tank or on the basic solution tank depending on where the reaction environment is located. In the event that the measurement indicates a value above a predetermined threshold, the ignition member is activated so as to initiate the combustion reaction. In an embodiment, the aforementioned threshold value corresponds to hydrogen gas being 4% by volume in the reaction environment. Accordingly, in an embodiment, a control member may be provided to ensure communication between the H₂ gas sensor and the ignition member.

In an embodiment of the present invention, the detection member mentioned in step (iv) is an ammeter configured to measure the current density of the power source depending on the operation of the electrolysis cell and, accordingly, to ensure the calculation of the amount of H₂ gas generated in the electrolysis cell. Accordingly, the ammeter is connected to the power source, and the amount of hydrogen in the reaction environment is calculated indirectly by measuring the current density of the power source. The reaction environment mentioned herein may be a reaction tank associated with the basic solution tank and the acid tank, or the basic solution tank itself. Since the power source is connected to the electrolysis cell, the operating duration of the power source and, accordingly, the power drawn by the electrolysis cell from the power source are directly proportional to the amount of hydrogen gas generated in the electrolysis cell. In an embodiment, if the operating duration of the power source exceeds 10 minutes and/or the current density measured by the ammeter exceeds 0.1 amperes, the ignition member is activated so as to initiate the combustion reaction. Accordingly, in an embodiment, a control member may be provided to ensure communication between the ammeter and the ignition member.

In an embodiment of the present invention, the threshold value mentioned in step (v) corresponds to H₂ gas being 4% by volume in the reaction environment. Accordingly, if the detection member is an H₂ gas sensor provided in the reaction environment, said threshold value is measured directly by means of the detection member and the ignition member is activated. If the detection member is an ammeter connected to the power source, the H₂ ratio in the reaction environment is calculated indirectly based on the operating duration of the power source and/or the current density drawn therefrom. Accordingly, in an embodiment, a situation wherein the power source operates for more than 10 minutes and/or at a current density exceeding 0.1 amperes indicates that H₂ gas has accumulated in the reaction environment at a level of 4% by volume or higher. In this case, the ignition member is activated.

The present invention also relates to a household appliance comprising an H₂ gas disposal assembly as in any of the above embodiments. The household appliance of the present invention is preferably a washing appliance comprising an electrolysis-based water softening and regeneration unit for softening the mains water. Accordingly, in an embodiment of the present invention, the household appliance is a washing machine or a dishwasher.

The H₂ gas disposal assembly realized in order to attain the aim of the present invention is illustrated in the attached figures, where:
Figure 1 - is the schematic view of the H₂ gas disposal assembly in an embodiment of the present invention.
Figure 2 - is the schematic view of the H₂ gas disposal assembly in another embodiment of the present invention.
Figure 3 - is the schematic view of the H₃ gas disposal assembly in another embodiment of the present invention.
Figure 4 - is the schematic view of the H₃ gas disposal assembly in another embodiment of the present invention.
Figure 5 - is the schematic view of the H₅ gas disposal assembly in another embodiment of the present invention.
Figure 6 - is the schematic view of the H₃ gas disposal assembly in another embodiment of the present invention.

The elements illustrated in the figures are numbered as follows:
- 100.: H₂ gas disposal assembly
- 1.: Electrolysis cell
11. Anode compartment
12. Cathode compartment
- 2.: Basic solution tank
21. First delivery line
22. Inlet valve
- 3.: Acid tank
31. Second delivery line
- 4.: Power source
- 5.: Reaction environment
51. Reaction tank
- 6.: Detection member
61. H₂ gas sensor
62. Ammeter
- 7.: Ignition member
- 8.: Pressure balancing valve
- 9.: O₂ gas sensor
- 10.: O₂ delivery line

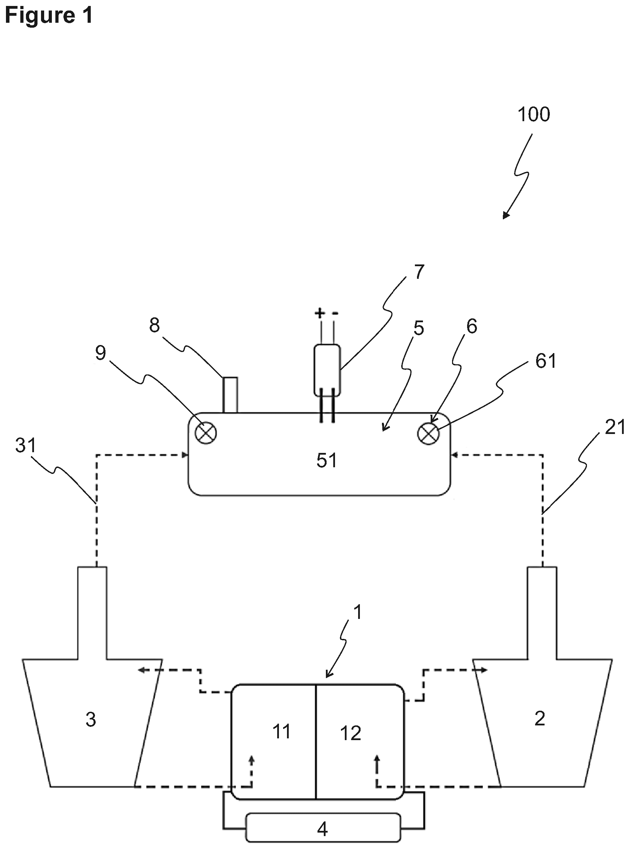

The H₂ gas disposal assembly (100) provided within the scope of the present invention is configured to be used in household appliances comprising a water softening unit wherein the electrolysis-based ion exchange resin regeneration is performed, and operates in coordination with an electrolysis cell (1) provided in said water softening unit. Accordingly, as shown in Figures 1 to 6, the H₂ gas disposal assembly (100) of the present invention comprises an electrolysis cell (1) having an anode compartment (11) and a cathode compartment (12) to provide the regeneration of an ion exchange resin, and a basic solution tank (2) and an acid tank (3) each separately associated with the electrolysis cell (1). The basic solution tank (2) is configured to circulate a base solution rich in OH⁻ ions with the cathode compartment (12). Accordingly, hydrogen (H₂) gas generated in the cathode compartment (12) is transferred to the basic solution tank (2) and accumulates therein. The acid tank (3) is associated with the electrolysis cell (1) so as to circulate an acid solution rich in H⁺ ions with the anode compartment (11). Accordingly, oxygen (O₂) gas generated in the anode compartment (11) is transferred to the acid tank (2) and accumulates therein. The energy required for the operation of the electrolysis cell (1) is provided by means of a power source (4) associated with said electrolysis cell (1). As can be understood in Figures 1 to 6, said power source (4) is a DC (direct current) source that provides constant voltage and current to the electrolysis cell (1). The negative (-) terminal of the power source (4) generates hydrogen gas in the cathode compartment (12), while the positive (+) terminal ensures the formation of oxygen gas in the anode compartment (11).

Referring to Figures 1 to 6, the H₂ gas disposal assembly (100) of the present invention further comprises a reaction environment (5) configured such that the H₂ gas stored in the basic solution tank (2) is brought into contact with O₂ gas for combustion. In the reaction environment (5), an ignition member (7) is provided, arranged to initiate a combustion reaction between H₂ and O₂. In the assembly (100) of the present invention, in order to initiate the combustion reaction, it is required that the amount of H₂ gas in the reaction environment (5) reaches a predetermined threshold value. Accordingly, at least one detection member (6) is provided in the assembly (100), configured to measure and/or calculate the H₂ ratio in the reaction environment (5). The balancing of the pressure varying due to the combustion reaction and the discharge of the generated water vapor from the reaction environment (5) are carried out by means of a pressure balancing valve (8) provided on said reaction environment (5).

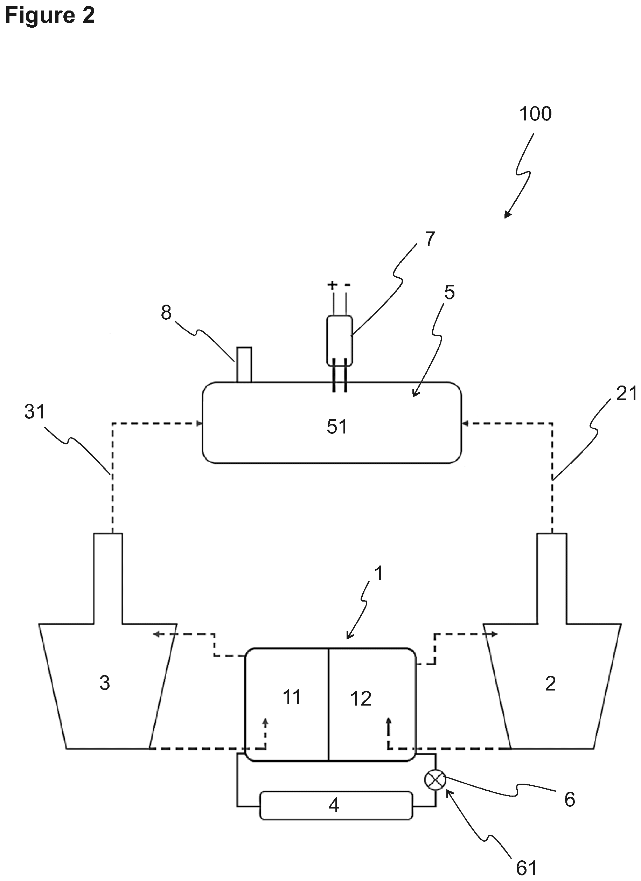

The reaction environment (5) may be a reaction tank (51) associated with both the basic solution tank (2) and the acid tank (3), as shown in Figures 1 and 2. Accordingly, the delivery of H₂ gas from the basic solution tank (2) into the reaction tank (51) is carried out by means of a first delivery line (21). Similarly, a second delivery line (31) is provided for delivering O₂ gas from the acid tank (3) into the reaction tank (51). Accordingly, the ignition member (7) is directly associated with the reaction tank (51). The discharge of the water vapor generated after the combustion reaction and, accordingly, the balancing of the pressure in the reaction tank (51) are also carried out by means of the pressure balancing valve (8) provided on the reaction tank (51).

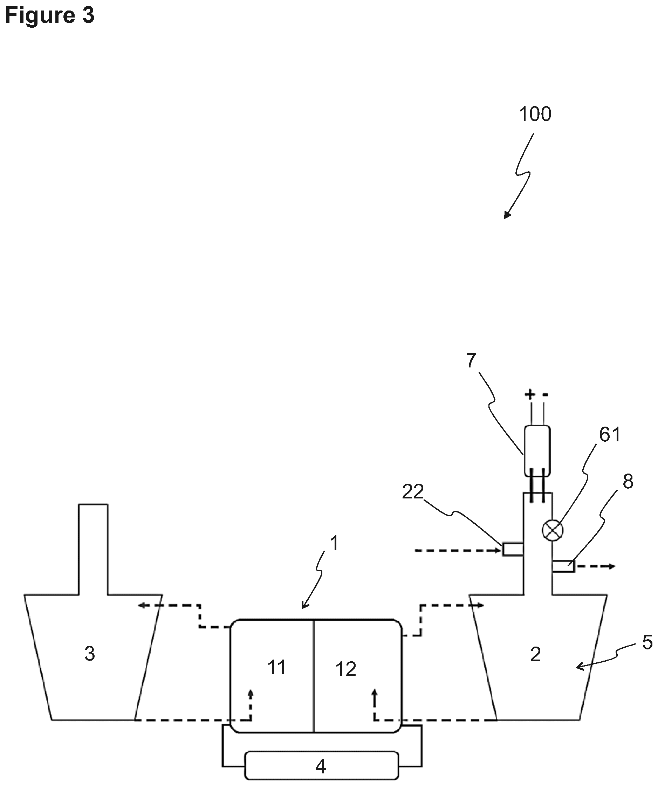

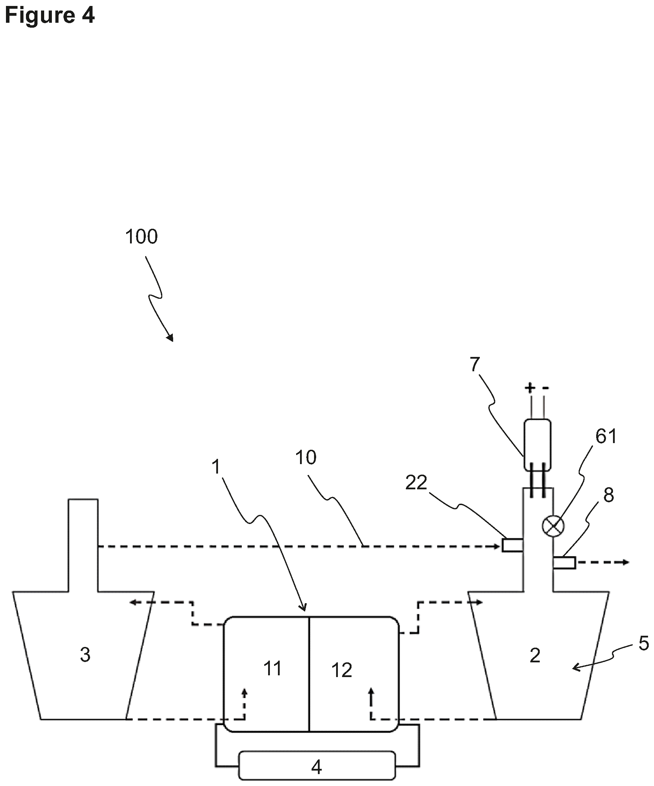

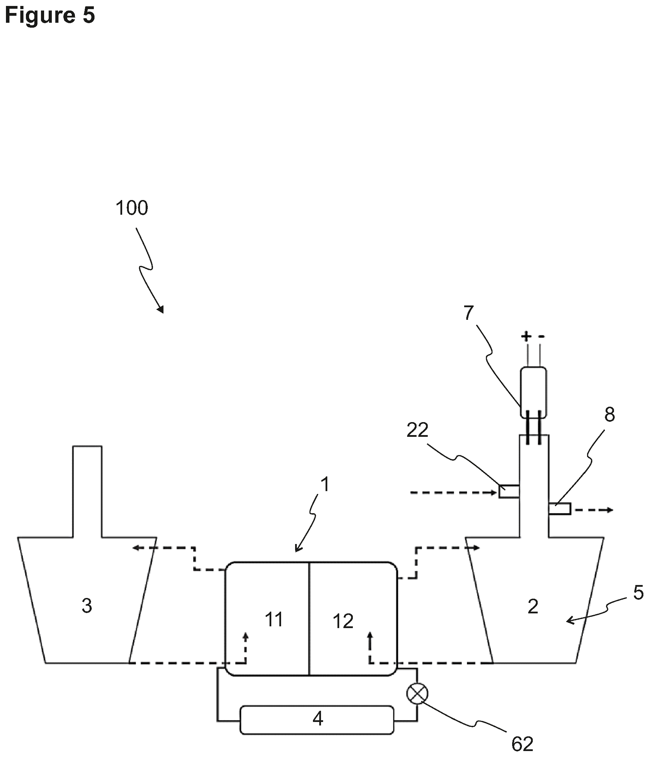

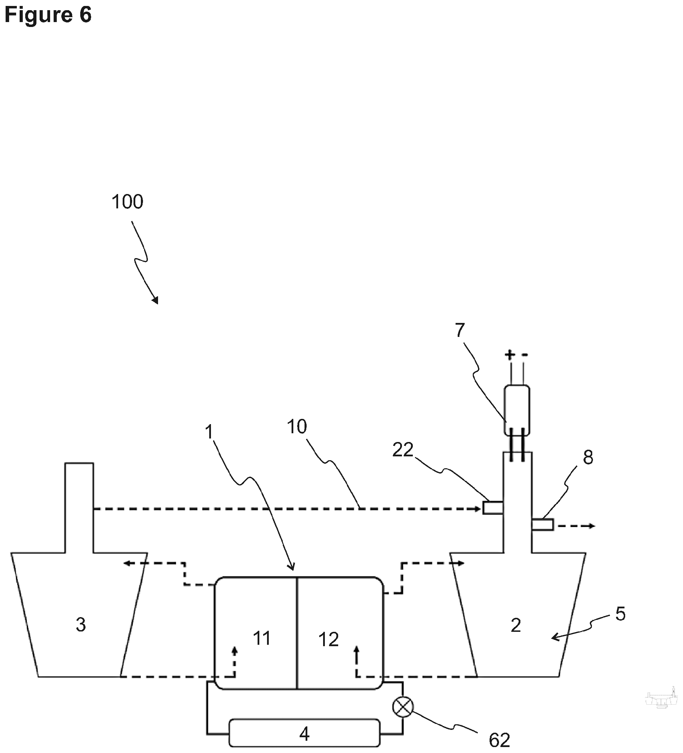

Referring to Figures 3 to 6, the reaction environment (5) may also be the basic solution tank (2) itself. Accordingly, an inlet valve (22) is provided on the basic solution tank (2), arranged to enable the introduction of O₂ into the basic solution tank (2) and to adjust the amount of O₂ entering therein. In the case where the reaction environment (5) is the basic solution tank (2) itself, the source of the O₂ gas introduced into the basic solution tank (2) may be the ambient air in the environment wherein the assembly (100) is located, as shown in Figures 3 and 5. In another case where the reaction environment (5) is the basic solution tank (2) itself, the source of the O₂ gas introduced into the basic solution tank (2) may be the acid tank (3), as shown in Figures 4 and 6. Accordingly, an O₂ delivery line (10) is provided between the acid tank (3) and the basic solution tank (2), configured to enable the delivery of O₂ gas to the basic solution tank (2). According to the configurations of the present invention shown in Figures 3 to 6, the ignition member (7) is directly associated with the basic solution tank (2). The discharge of the water vapor generated after the combustion reaction and, accordingly, the balancing of the pressure in the basic solution tank (2) are also carried out by means of the pressure balancing valve (8) provided on the basic solution tank (2).

According to the configurations of the present invention shown in Figures 1, 3, and 4, the detection member (6) is an H₂ gas sensor (61) configured to directly measure the ratio of H₂ gas in the reaction environment (5). Accordingly, when the H₂ ratio in the reaction environment (5) reaches the predetermined threshold value or exceeds said value, the H₂ gas sensor (61) detects this condition, ensuring the activation of the ignition member (7). The functional relationship between the H₂ gas sensor (61) and the ignition member (7) may be established by means of a control member. The aforementioned threshold value preferably corresponds to hydrogen gas being 4% by volume in the reaction environment (5). According to the configuration shown in Figure 1, the H₂ gas sensor (61) is provided on the reaction tank (51). Accordingly, the reaction tank (51) is further equipped with an O₂ gas sensor (9) configured to measure the ratio of O₂ gas therein. Thus, the ratio between H₂ and O₂ gases in the reaction tank (51) can also be balanced, thereby enabling more controlled disposal of H₂. In the configurations shown in Figures 3 and 4, the H₂ gas sensor (61) is provided on the basic solution tank (2), which constitutes the reaction environment (5). In these configurations, the balance between O₂ and H₂ may be ensured through the coordinated operation of the inlet valve (22) and the H₂ gas sensor (61).

According to the configurations of the present invention shown in Figures 2, 5, and 6, the detection member (6) is an ammeter (62) that is configured to enable the indirect calculation of the H₂ ratio in the reaction environment (5) and that is associated with the power source (4). Accordingly, whether the H₂ ratio in the reaction environment (5) reaches the predetermined threshold value is calculated based on the current density drawn by the power source (4) depending on the operating duration of the electrolysis cell (1) and/or based on the operating duration of the power source (4). The aforementioned threshold value preferably corresponds to hydrogen gas being 4% by volume in the reaction environment (5). Accordingly, if the operating duration measured by the ammeter (62) exceeds 10 minutes and/or the current density exceeds 0.1 amperes, it is determined that the volumetric ratio of hydrogen gas in the reaction environment (5) has reached or exceeded 4%. Accordingly, the functional relationship between the ammeter (62) and the ignition member (7) may be established by means of a control member.

The present invention also discloses a method for disposing H₂ gas to be implemented in the H₂ gas disposal assembly (100) as in any of the embodiments shown in Figures 1 to 6. The method of the present invention comprises the following process steps:
i. checking whether the electrolysis cell (1) is active,
ii. checking whether the power source (4) is active,
iii. checking whether the circulation between the electrolysis cell (1) and the basic solution tank (2) and the acid tank (3) is active,
iv. determining the volumetric ratio of H₂ gas in the reaction environment (5) by means of the detection member (6),
v. activating the ignition member (7) if the ratio of H₂ gas in the reaction environment (5) exceeds a predetermined threshold value,
vi. opening the pressure balancing valve (8), simultaneously with the activation of the ignition member (7), to balance the pressure decreasing as a result of the combustion reaction and to discharge the resulting gases,
vii. closing the pressure balancing valve (8) at the end of the reaction, and
viii. returning to step (iv).

Accordingly, the detection member (6) mentioned in step (iv) may be an H₂ gas sensor (61) configured to measure the amount of H₂ gas in the reaction environment (5), with reference to Figures 1, 3, and 4. Referring to Figures 2, 5 and 6, the detection member (6) mentioned in step (iv) may be an ammeter (62) configured to measure the current density of the power source (4) depending on the operation of the electrolysis cell (1) and, accordingly, to ensure the calculation of the amount of H₂ gas generated in the electrolysis cell (1). The reaction environment (5) mentioned in steps (iv) and (v) may be a reaction tank (51) associated with the basic solution tank (2) and the acid tank (3), with reference to Figures 1 and 2, or the basic solution tank (2) itself, with reference to Figures 3 to 6. The controls mentioned in steps (i), (ii), and (iii) may be carried out by means of a control member provided on the assembly (100). Said control member may also be responsible for the communication between the detection member (6), the ignition member (7), and the pressure balancing valve (8).

The present invention also relates to a household appliance comprising an H₂ gas disposal assembly (100) as shown in any of Figures 1 to 6. The household appliance of the present invention is preferably a washing appliance comprising an electrolysis-based water softening and regeneration unit for softening the mains water. Accordingly, in an embodiment of the present invention, the household appliance is a washing machine or a dishwasher.

## Claims

1. An H₂ gas disposal assembly (100) suitable for use together with electrolysis-based water softening and regeneration units, **comprising** an electrolysis cell (1) having an anode compartment (11) and a cathode compartment (12) to provide the regeneration of an ion exchange resin, a basic solution tank (2) associated with the electrolysis cell (1) so as to circulate a base solution rich in OH⁻ ions with the cathode compartment (12); an acid tank (3) associated with the electrolysis cell (1) so as to circulate an acid solution rich in H⁺ ions with the anode compartment (11); a power source (4) that provides the energy required for the operation of the electrolysis cell (1), **characterized by**
- a reaction environment (5) configured such that the H₂ gas stored in the basic solution tank (2) is brought together with O₂ gas;
- a detection member (6) arranged to determine the amount of H₂ gas in the reaction environment (5);
- an ignition member (7) associated with the reaction environment (5) for initiating a combustion reaction; and
- a pressure balancing valve (8) arranged to balance the pressure in the reaction environment (5).

2. An H₂ gas disposal assembly (100) as in Claim 1, **characterized in that** the detection member (6) is an H₂ gas sensor (61) configured to measure the amount of H₂ gas in the reaction environment (5).

3. An H₂ gas disposal assembly (100) as in Claim 1, **characterized in that** the detection member (6) is an ammeter (62) configured to measure the current density of the power source (4) depending on the operation of the electrolysis cell (1) and, accordingly, to ensure the calculation of the amount of H₂ gas generated in the electrolysis cell (1).

4. An H₂ gas disposal assembly (100) as in any one of Claims 1 to 3, **characterized in that** the reaction environment (5) is a reaction tank (51) associated with the basic solution tank (2) and the acid tank (3).

5. An H₂ gas disposal assembly (100) as in Claim 4, **characterized by** a first delivery line (21) configured to allow the gas exchange between the reaction tank (51) and the basic solution tank (2) and, accordingly, to allow the delivery of the H₂ gas in the basic solution tank (2) to the reaction tank (51).

6. An H₂ gas disposal assembly (100) as in Claim 5, **characterized by** a second delivery line (31) configured to allow the gas exchange between the reaction tank (51) and the acid tank (3) and, accordingly, to allow the delivery of the O₂ gas in the acid tank (2) to the reaction tank (51).

7. An H₂ gas disposal assembly (100) as in any one of Claims 1 to 3, **characterized in that** the reaction environment (5) is the basic solution tank (2) itself.

8. An H₂ gas disposal assembly (100) as in Claim 7, **characterized by** an inlet valve (22) that is arranged on the basic solution tank (2) so as to enable the delivery of the ambient air in the environment to the basic solution tank (2) as an O₂ gas source and, accordingly, to adjust the amount of O₂ entering the basic solution tank (2).

9. An H₂ gas disposal assembly (100) as in Claim 7 or 8, **characterized by** an O₂ delivery line (10) configured to ensure the delivery of O₂ gas leaving the acid tank (3) to the basic solution tank (2).

10. A method for disposing H₂ gas to be applied in an H₂ gas disposal assembly (100) as in any one of the above claims, comprising the steps of:
i. checking whether the electrolysis cell (1) is active,
ii. checking whether the power source (4) is active,
iii. checking whether the circulation between the electrolysis cell (1) and the basic solution tank (2) and the acid tank (3) is active,
iv. determining the volumetric ratio of H₂ gas in the reaction environment (5) by means of the detection member (6),
v. activating the ignition member (7) if the ratio of H₂ gas in the reaction environment (5) exceeds a predetermined threshold value,
vi. opening the pressure balancing valve (8), simultaneously with the activation of the ignition member (7), to balance the pressure decreasing as a result of the combustion reaction and to discharge the resulting gases,
vii. closing the pressure balancing valve (8) at the end of the reaction, and
viii. returning to step (iv).

11. A method as in Claim 10, **characterized in that** the detection member (6) mentioned in step (iv) is an H₂ gas sensor (61) configured to measure the amount of H₂ gas in the reaction environment (5).

12. A method as in Claim 10, **characterized in that** the detection member (6) mentioned in step (iv) is an ammeter (62) configured to measure the current density of the power source (4) depending on the operation of the electrolysis cell (1) and, accordingly, to ensure the calculation of the amount of H₂ gas generated in the electrolysis cell (1).

13. A method as in any one of Claims 10 to 12, **characterized in that** the threshold value mentioned in step (v) corresponds to H₂ gas being 4% by volume in the reaction environment.

14. A household appliance comprising an H₂ gas disposal assembly (100) as in any one of Claims 1 to 9.
